# EUROPEAN PATENT APPLICATION

(11) **EP 1 035 488 A1**
(43) Date of publication of application: **13.09.2000**
(21) Application number: 98947951.4
(22) Date of filing: 20.10.1998
(51) Int. Cl.: G06F 17/60

(54) **CONTENTS VENDING SYSTEM**

(30) Priority: 20.10.1997 JP 30498697
(71) Applicant: V-Sync Technology CO., Ltd., Okayama-shi, Okayama 701-0221 (JP)
(72) Inventor: FUJII, Katsuma, Okayama-shi, Okayama 701-0221 (JP); IBE, Takaya, Omiya-shi, Saitama 330-0843 (JP)
(74) Representative: HOFFMANN - EITLE
(86) International application number: JP9804735
(87) International publication number: WO9921113

(57) **Abstract**

To provide an electronic content vending system which enables one to purchase the desired content goods from an electronic vending terminal on the spot. A content- vending system using a computer network, said system vending information over a computer network which comprises at least a computer terminal, a charge management server, an intellectual property rights management server, and a content storage server, wherein
the content storage server stores the content; and
the user selects the content at a computer terminal which is locally and pays at said computer terminal for the charge for the selected content displayed via the charge server, whereupon said content selected on a medium is recorded thereon, thereby providing a recording medium with the record of said content.

## Description

### Technical Field of the Invention

The present invention relates to an electronic content vending system. It further relates to a an electronic content- vending system wherein the desired content goods can be specified at an electronic- vending computer terminal and upon payment for the designated charge, said content is made available on the spot.

### Prior Arts

Broadcasting, telephoning, and computer technologies are evolving, mutually interacting with one another. These three communication means are being consolidated into a computer network. The Internet as an exemplary model is advancing by leaps and bounds. Cyberspaces have been generated on the Internet and their commercial use has emerged. Stores are being generated in the cyberspace and the goods are beginning to be sold. The main advantages of Internet shopping are a 24- hour availability, accessibility from anywhere as long as one is connected to the Web, no need to travel, timesaving, and the like.

The Internet is anticipated to make electronic business transactions viable on a global perspective, doing away with physical and geographical barriers against human activities. It has been pointed out that there is the question of security before such an electronic business transaction on the network is broadly accepted. Problems that have been mentioned with Internet on-line shopping are: the lack of selection of the settlement means, credit card information leaks/fraud, lack of data privacy, and the like. Electronic money using sophisticated encryption technology has been developed to address the security problem. However, a highly secure electronic settlement system is yet to be established.

In order to settle a secure and accurate business transaction on the network, verification by telephone, FAX, or letter, is used. This process, manual and time consuming, is very inefficient for a method to be adopted in the network age. It is an object of this invention to propose a system to vend goods in a not yet realized sales system by adopting a method which completely incorporates all the characteristic business transaction elements on the network and settles the charge on the spot. That is, as the user at a system computer terminal designates the content goods he wishes to purchase and pays the cash for the charge for the goods, or settles with a credit card, or the like, the content goods is transmitted via a network to said computer terminal, where the content will be written in a recording medium or provided in- printed form. The goods targeted for sales arc mostly multi- media contents. They specifically include a variety of software, music information, text information, image information, and the like.

Furthermore, electronic business transactions via an individual's computer on the internet, in addition to such difficulties in settling charges, face the following problems: Unless special hardware is connected to the user, he cannot download photographs or audio or write to an MD and the like media to be used as goods, not every user is expected to have all the hardware needed to meet the requirements of a variety of content types. The vending of a variety of content types can be realized only by the present invention, which calls for installing dedicated computer terminals in public places and so on.

There is yet no system based on the conventional internet which can accurately process real time intellectual property rights such as for copyright and the like and protect the owners of these rights. No system exists that provides a real time processing of charges and the related information thereof.

In order to solve these problems, the invention of claim 1 of the present invention is a content-vending system using a computer network, said system vending information over a computer network which comprises at least a computer terminal, a charge management server, an intellectual property rights management server, and a content storage server, wherein
the content storage server stores the content; and
the user selects content at a computer terminal which is locally installed and pays at said computer terminal for the charge for the selected content displayed via the charge server, whereupon said content selected on a medium is recorded thereon, thereby providing a recording medium with the record of said content being recorded thereon.

The invention of Claim 2 is a content-vending system using a computer network further comprising, in addition to the construction as set forth in Claim 1, a cash payment for the charge.

The invention of Claim 3 is a content-vending system using a computer network, in addition to the construction, as set forth in Claim 1 or Claim 2, wherein the system which Vends content using a computer network is provided with a content-transmitting server.

The invention of Claim 4 is a content- vending system using a computer network, in addition to the construction as set forth in any one of the Claims 1-3, wherein the content is a music or computer program.

The invention of Claim 5 is a content- vending system using a computer network in addition to the construction as set forth in any one of the Claims 1-4 wherein the recording medium is a digital information medium, such as an MD, CD- ROM, and semiconductor memory.

The invention of Claim 6 is a content- vending system using a computer network, in addition to the construction as set forth in Claim 1, wherein the computer terminal is provided with at least a content selection means, a network data transmitting means, a network data receiving means, a charging means, and a display means.

The invention of Claim 7 is a content- vending system using a computer network, in addition to the construction as set forth in Claim 1 or Claim 3, wherein the computer network is connected to a public telephone line or a dedicated line.

The invention of Claim 8 is a content- vending system using a computer network, in addition to the construction as set forth in any one of the Claims 1,3, or 7, wherein the computer network communication line is made of optical fibers.

The invention of Claim 9 is a content- vending system using a computer network, said system vending musical content over a computer network which comprises a computer terminal, a charge management server, an intellectual property rights management server, and a content storage server, and a content- transmitting server, wherein
the content storage server stores the content;
the user selects content at a computer terminal which is locally installed and pays at said computer terminal for the charge for the selected content displayed via the charge server, whereupon the musical content in the content server is transmitted from the content- transmitting server to said computer terminal; and the transmitted musical content is recorded on an MD medium as the content, thereby providing a recording MD medium having said content recorded thereon and at the same time permitting the intellectual rights management server to process intellectual property rights.

The invention of Claim 10 is a content- vending system using a computer network, said system vending computer program content on a computer network which comprises a computer terminal, a charge management server, an intellectual property rights management server, and a content storage server, and a content- transmitting server, wherein
the content storage server stores the content;
the user selects content at a computer terminal which is locally installed and pays at said computer terminal for the charge for the selected content displayed via the charge server, whereupon the computer program content on the content server is transmitted from the content- transmitting server to said computer terminal; and the transmitted computer program content is recorded on a CD- ROM as the content thereby providing a CD- ROM recording medium having said content recorded thereon and at the same time permitting the intellectual property rights management server to process intellectual property rights.

As described above, the present invention is a content- vending system using a computer network. That is, it is a content- vending system using a computer network, said system vending information over a computer network which comprises at least a computer terminal, a charge management server, an intellectual property rights management server, and a content storage server, wherein
the content storage server stores the content; and
the user selects content at a computer terminal which is locally and pays at said computer terminal for the charge for the selected content displayed via the charge server, whereupon said content selected on a medium is recorded thereon, thereby providing a recording medium with the record of said content.

The network is at least provided with a computer terminal, a charge management server, an intellectual property rights management server, and a content storage server. These servers may also have a content- transmitting server added to them. The network is also provided with a recorder needed to process information. The computer terminal permits the user to use the terminal to select the desired content pay the charge, and receive a medium on which the desired content is recorded. Thus, the computer terminal is provided at least with a content selection means, a network data transmitting means, a network data receiving means, a charging means, and a display means. The computer terminal is also provided with a recorder for processing [recording] the information.

At the computer terminal, the user selects the desired content from content displayed by display a means such as a display. The selection can be executed by a selection means such as a mouse, a touch panel, a track ball, a joystick, a keyboard, or the like. The selected content is transmitted from the data transmitting means and the corresponding content is selected from the content storage server. The charge management server detects the payment of the charge at the computer- terminal, and the content is transmitted to the computer terminal from the content storage server or the content storage server via the content- transmitting server.

In this operation, the intellectual property rights management server process the intellectual property rights for the content. It specifically calculates the intellectual property rights charge [royalty] for the content and distributes the royalty to the intellectual property rights owner(s). The intellectual property rights royalty to be received can be requested to be credited to each intellectual property rights owner's account.

The charge for the content to be paid at the computer terminal is preferably in cash. A credit card may also be used. The contents provided by the system are a variety of information such as music, images, computer programs, text information, and so on. In particular, music and computer programs can be suitably used. The media for recording the content that can be used include floppy disks, MDs, CD- ROMs, and semi- conductor memories. In particular, an MD, a CD- ROM, and a semi- conductor memory can be suitably used. If the content is music, an MD and semi- conductor memory are suitably used, as are a CD- ROM and a semi- conductor memory for computer programs.

The network of this invention may use a public telephone line or a dedicated line. The network may be a small unit LAN such as for a single room or a building or a network which is a broad range WAN- type; it may also be a global scale network such as the Internet. The line connecting to these may be a conventional electrical wire, preferably an optical fiber line.

Preferred examples for applying the present invention to are those in which music or computer programs are the content Music may be provided in the forms of MD and semi- conductor memory and a computer program in CD- ROM and semi- conductor memory. Since these content may be objects of copyrights, these are processed by the intellectual property rights management server.

### Embodiments of the Invention

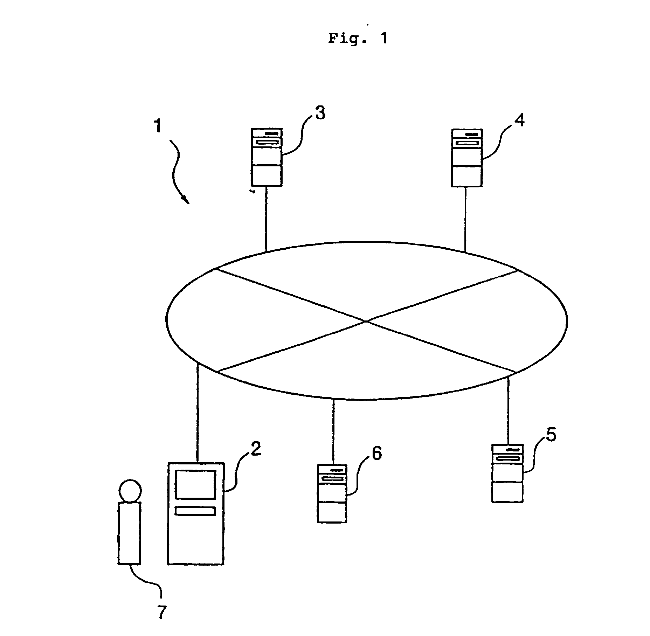

Embodiments of the present invention are now explained in reference to the drawings. In Figure 1, an optical fiber network 1 is connected to a data storage server 3, a charge management server 4, an intellectual rights management server 5, and a content- transmitting server 6, and also at least to one computer terminal 2.7 is the user.

Copyright owners or sales rights licensees wishing to sell their content may rent or purchase a content memory segment of the data storage server 3 to store the content to be vended.

The above computer terminal 2 should be installed in various places in towns such as convenience stores, record shops, shopping centers, railroad stations, highway service areas/parking areas, and so on. Said computer terminal 2 is provided with a display that can display the vending target items and allows the desired content to be inputted/selected/searched by means of a touch panel, mouse, track ball, joy stick, keyboard, and the like. The user wishing to purchase content operates the computer terminal 2 to search/select the desired music software; the charge is displayed on a display; and then the user pays the charge with cash or a cash card.

The charge management server 4 detects the cash payment/ order, looks up the intellectual property rights management server 5, and sends an order to a master storage server 3. The master storage server 3 confirms the order and ships the software to a content- transmitting sewer 6. At the same time, it also invoices the charge management server 4 and the intellectual property rights management server 5.

The charge management server 4 records the cash payment. The intellectual property rights management server 5 determines and records how much copyright royalty is to be paid to the copyright owner. It is also possible to notify each rights holder.

The content is then transmitted via the network to the computer terminal 2, directly stamped onto a medium such as an MD, and is provided to the user. If needed, a manual or the like is printed for the user.

Another embodiment is given. In the optical fiber network 1 of Figure 1, a recorder (not illustrated), a data storage server 3, a charge management server 4, an intellectual property right management server 5, and a content- transmitting server 6 are connected to each other and also to a plurality of computer terminals 2. The computer terminal 2 also has a recorder. A musical piece content is compressed by the recorder and stored in the content storage segment of the data storage server 3.

The stored music information, in accord with the directive from the computer terminal 2 via the network, is delivered as compressed along with any accompanying TOC information to the computer terminal from the data storage server 3, via the content- transmitting server 6 and the network. The music information being delivered along its designation and/or ID number is recorded on the charge management server 4 and the intellectual property rights management server 5. The delivered music information and TOC information are recorded on a recording medium under the MD specification by the recorder in the computer terminal.

### Explanation Symbols

- 1:: Optical fiber network
- 2:: Computer terminal
- 3:: Data storage server
- 4:: Charge management server
- 5:: Intellectual property rights management server
- 6:: Content- transmitting server
- 7:: Use

### Advantageous Effect of the Invention

The present invention features the storage of content on a data storage server on a network (a single storage) so that there is no need for each store to have its own. This will save space resources, eliminate any transportation costs, and allow the latest information to be accessed from the terminal requiring only the updating of the information, when it is to be upgraded, on the data storage server. The accessible content fields are not limited, allowing an accession over any field as long as the content can be stored on a master storage server.

If a system for direct cash payment is adopted at each terminal in this invention, the charge collection is assured. The information on the cash paid is also simultaneously sent to the charge management server so that accurate charge information is obtained and marketing information is acquired rapidly. The international property rights management server also processes the intellectual property rights such as copyright, thereby also contributing to the protection of rights for copyright owners and the like.

Simply having a terminal makes it possible to vend any information on the data storage server for 24 hours a day. A space only big enough to install a computer terminal enables one to vend all of the enormous amount of content stored on the data storage server. An unmanned vending is also possible at the computer terminal. Basically, the process involves vending via a computer- managed terminal so that the process is superior significantly in terms of searching, to selection from among goods displayed in a storefront Also, The system can accommodate in a limitless way a scheme where for example, the user first makes a trial listening to the highlight of music information or the like before purchase.

## Claims

1. A content- Vending system using a computer network, said system vending information (hereafter content) over a computer network which comprises at least a computer terminal, a charge management server, an intellectual property rights management server, and a content storage server, wherein
the content storage server stores the content; and
the user selects content at a computer terminal which is locally installed
and pays at said computer terminal the charge for the selected content displayed via the charge server, Whereupon said content selected on a medium is recorded thereon, thereby providing a recording medium with the record of said content being recorded thereon.

2. A content- vending system using a computer network as set forth in Claim 1, further comprising a cash payment for the charge.

3. A content- vending system using a computer network as set forth in Claim 1 or Claim 2 wherein the system, which vends its content using a computer network, is provided with a content- transmitting server,

4. A content- vending system using a computer network as set forth in any one of the Claims 1-3, wherein the content is a music or computer program.

5. A content- vending system using a computer network as set forth in any one of the Claims 1-4 wherein the recording medium is an MD, CD- ROM, or semiconductor memory digital information medium.

6. A content- vending system using a computer network as set forth in Claim 1 wherein the computer terminal is provided with at least a content selection means, a network data transmitting means, a network data receiving means, a charging means, and a display means.

7. A content- vending system using a computer network as set forth in Claim 1 or Claim 3 wherein the computer network is connected to a public telephone line or a dedicated line.

8. A content- vending system using a computer network as set forth in any one of the Claims 1,3, or 7, wherein the computer network communication line is made of optical fibers.

9. A content- vending system using a computer network, said system vending musical content over a computer network which comprises a computer terminal, a charge management server, an intellectual property rights management server, and a content storage server, and a content- transmitting server, wherein
the content storage server stores the content;
the user selects content at a computer terminal which is locally installed and pays at said computer terminal for the charge for the selected content displayed via the charge server, whereupon the musical content in the content server is transmitted from the content- transmitting server to said computer terminal; and the transmitted musical content is recorded on an MD medium as the content, thereby providing a recording MD medium having said content recorded thereon and at the same time permitting the intellectual property rights management server to process intellectual property rights.

10. A content- vending system using a computer network, said system vending computer program content on a computer network which comprises a computer terminal, a charge management server, an intellectual property rights management server, and a content storage server, and a content- transmitting server, wherein
the content storage server stores the content;
the user selects content at a computer terminal which is locally installed and pays at said computer terminal for the charge for the selected content displayed via the charge server, whereupon the computer program content on the content server is transmitted from the content- transmitting server to said computer terminal; and the transmitted computer program content is recorded on a CD- ROM as the content, thereby providing a CD- ROM recording medium having said content recorded thereon and at the same time permitting the intellectual property rights management server to process intellectual property rights.
